# EUROPÄISCHE PATENTSCHRIFT

(11) **EP 1 105 861 B1**
(45) Veröffentlichungstag und Bekanntmachung des Hinweises auf die Patenterteilung: **15.10.2003**
(21) Anmeldenummer: 99944482.1
(22) Anmeldetag: 23.08.1999
(51) Int. Cl.: G09F 21/04, G07C 5/00, G07C 1/20

(54) **VORRICHTUNG UND VERFAHREN ZUM AUTOMATISIERTEN BARGELDLOSEN ENTRICHTEN DES ENTGELTS FÜR DIE ANBRINGUNG EINES WERBETRÄGERS AN EINEM FAHRZEUG, WERBETRÄGER**
DEVICE AND METHOD FOR THE AUTOMATIC, CASHLESS PAYMENT OF A FEE FOR INSTALLING AN ADVERTISING MEDIUM ON A VEHICLE AND CORRESPONDING ADVERTISING MEDIUM
DISPOSITIF ET PROCEDE POUR LE PAIEMENT AUTOMATIQUE ET SANS ESPECES DE LA RETRIBUTION POUR L'INSTALLATION D'UN SUPPORT PUBLICITAIRE SUR UN VEHICULE, ET SUPPORT PUBLICITAIRE CORRESPONDANT

(30) Priorität: 22.08.1998 DE 19838090
(43) Veröffentlichungstag der Anmeldung: 13.06.2001
(73) Patentinhaber: Schulden, Christoph J., 91088 Bubenreuth (DE)
(72) Erfinder: SCHULDEN, Christoph, J., D-91088 Bubenreuth (DE); VON BONIN, S., Quintus, F., F., New York, NY 10012 (US)
(74) Vertreter: Herzog, Markus, Dipl.-Phys. Dr.
(86) Internationale Anmeldenummer: EP9906177
(87) Internationale Veröffentlichungsnummer: WO00011642

(56) Entgegenhaltungen:
- EP-A- 0 131 211
- DE-A- 3 627 989
- DE-A- 19 501 638
- US-A- 5 422 624

## Beschreibung

Die Erfindung betrifft eine Vorrichtung zum automatisierten bargeldlosen Entrichten des Entgelts für die Anbringung eines Werbeträgers an einem Fahrzeug.

Die gewerbliche Anbringung von Werbeträgern an Fahrzeugen ist seit langem bekannt. So sind beispielsweise auf großen Oberflächen von öffentlichen Verkehrsmitteln, wie Bussen, Straßenbahnen sowie S- oder U-Bahnen, oder von Taxis häufig Werbefolien angebracht. Die Unternehmen, für die auf diesen Folien geworben wird, entrichten hierfür an den den Betreiber der öffentlichen Verkehrsmittel oder Taxiunternehmer einen bestimmten Geldbetrag. Dieses Entgelt kann beispielsweise in bestimmten Zeitabständen zu entrichten sein.

Um zu gewährleisten, dass der Werbeträger ordnungsgemäß an dem Fahrzeug angebracht ist, führt ein Mitarbeiter des werbenden Unternehmens oder eines hiermit beauftragten Unternehmens von Zeit zu Zeit Sichtprüfungen an dem Fahrzeug durch. Aufgrund des hohen Personalaufwands verursacht dieses Überwachungsverfahren erhebliche Kosten. Um eine vertretbare Relation zwischen den durch die Anbringung des Werbeträgers und die Sichtprüfung entstehenden Kosten und dem durch die Werbung bewirkten wirtschaftlichen Effekt zu wahren, wurden die Sichtprüfungen bislang nur in relativ großen Zeitabständen durchgeführt. Überdies war die Kontroll- und Überwachungsfunktion nur lokal und nicht überregional durchführbar.

Zum allgemeinen technologischen Umfeld wird auf folgende Schriften verwiesen:

Aus der WO-A-94/28526 ist es bekannt, in Fahrzeuge beispielsweise an Tankstellen Informationen einzuspeisen, die den Insassen des Fahrzeugs dann bei der Weiterfahrt mitgeteilt werden.

EP-A-131 211 offenbart einen mit einem Transponder ausgestatteten und zur Anbringung an einem Fahrzeug ausgebildeten Werbeträger.

Aus der DE-A-44 33 569 ist es bekannt, dass sich Kunden in einem Supermarkt oder dergleichen an einer Anzeige/Eingabe-Einrichtung zunächst anzeigen lassen, für welche Waren Rabatte gewährt werden, und anschließend durch entsprechende Betätigung einer Tastatur der Anzeige/Eingabe-Einrichtung die sie interessierenden Waren auswählen. Der Rabatt wird allerdings nur dann gewährt, wenn später an der Kasse festgestellt wird, dass die betreffende Ware auch tatsächlich gekauft worden ist.

Aus der DE-U-93 20 892 ist schließlich ein Benutzungskontrollsystem für Skilifte und Seilbahnen bekannt, welches die Zugangsberechtigung einer Person zu dem Skilift bzw. der Seilbahn berührungslos überprüft.

Es ist Aufgabe der vorliegenden Erfindung, eine Vorrichtung anzugeben, welche in der Lage ist, die Anbringung eines Werbeträgers an einem Fahrzeug automatisch zu überprüfen und den Fahrzeughalter bzw. Fahrzeugführer bei ordnungsgemäßem Vorhandensein des Werbeträgers an dem Fahrzeug automatisch bargeldlos zu entlohnen.

Diese Aufgabe wird erfindungsgemäß gelöst durch eine Vorrichtung zum automatisierten bargeldlosen Entrichten des Entgelts für die Anbringung wenigstens eines Werbeträgers an einem Fahrzeug, welche eine an einer Kontrollstelle angeordnete erste Kommunikationseinrichtung und eine an dem Werbeträger angeordnete zweite Kommunikationseinrichtung umfaßt, wobei die zweite Kommunikationseinrichtung für die erste Kommunikationseinrichtung Informationen bereitstellt, anhand derer das Vorhandensein des Werbeträgers an dem Fahrzeug überprüfbar ist, sowie eine Einrichtung umfaßt zum Erstellen einer Gutschrift als Entgelt für die Anbringung des Werbeträgers an dem Fahrzeug in Abhängigkeit des Ergebnisses der Vorhandenseins-Überprüfung. Die automatische Überprüfung des ordnungsgemäßen Vorhandenseins des Werbeträgers an dem Fahrzeug erfolgt durch Kommunikation der beiden Kommunikationseinrichtungen. Ist die Überprüfung positiv verlaufen, so wird als Entgelt für die Anbringung des Werbeträgers an dem Fahrzeug automatisch eine Gutschrift erstellt.

Einer der Vorteile der erfindungsgemäß automatisch erfolgenden Überprüfung des ordnungsgemäßen Vorhandenseins des Werbeträgers an dem Fahrzeug sowie der automatischen Entlohnung des Fahrzeughalters ist selbstverständlich in der Kosteneinsparung zu sehen, die mit dem vollständigen Ausschluß menschlicher Arbeitsleistung einhergeht. Dies ermöglicht es, die Zeitintervalle zwischen zwei aufeinander folgenden Überprüfungen so zu verkürzen, dass nunmehr eine große Menge von Fahrzeugen, u.a auch Privatfahrzeuge, für die Anbringung von Werbeträgern in Frage kommt, sowie ein überregionales Werbeprogramm effizient gestaltet werden kann. Als weitere Vorteile können eine erhöhte Effizienz des Überprüfungs- und Abrechnungsverfahrens, die Vermeidung menschlicher Fehler bzw. vorsätzlicher falscher Eingriffe bei Kontrolle und Abrechnung genannt werden. Schließlich ist auch auf die Möglichkeit einer einfachen Einbindung der Erfindung in bestehende IT-Systeme hinzuweisen.

Um auch dann, wenn die Länge des Zeitintervalls zwischen zwei aufeinanderfolgenden Überprüfungen nicht vorgeschrieben ist, möglichst kurze Prüfintervalle sicherstellen zu können, kommen als Kontrollstellen Orte in Frage, die von den Fahrzeugen ohnehin häufig angefahren werden. Dies ist beispielsweise bei Tankstellen oder/und Mautstellen der Fall.

Wird die Gutschrift unmittelbar mit dem an der Tankstelle oder/und Mautstelle zu entrichtenden Geldbetrag verrechnet, so kann für den Fahrzeugführer ein weiterer Anreiz geschaffen werden, die Kontrollstelle häufig anzufahren. Grundsätzlich ist es jedoch ebenso möglich, die Gutschrift in Form eines Gutschrift-Beleges zu erstellen, der dann bei einem der nächsten Halte an der Kontrollstelle oder an anderen Stellen, beispielsweise Kaufhäusern und dergleichen, eingelöst werden kann. Eine weitere Möglichkeit besteht schließlich darin, die Gutschrift durch einen entsprechenden Eintrag auf einem schreib-/lesefähigen Speichermedium, beispielsweise einer Chip- oder Magnetstreifen-Karte, zu erstellen. Die Gutschrift kann in diesem Fall an jeder beliebigen Stelle, an der diese Karte als Zahlungsmittel akzeptiert wird, eingelöst werden. Das schreib-/lesefähige Speichermedium kann aber auch an dem Fahrzeug oder dem Werbeträger fest angeordnet sein und beispielsweise lediglich die Verrechnung mit an dieser oder vergleichbaren Kontrollstellen zu entrichtenden Geldbeträgen erlauben. Es sei an dieser Stelle darauf hingewiesen, dass die erste Kommunikationseinrichtung und die Einrichtung zum Erstellen der Gutschrift nicht nur in diesem Fall als Funktionseinheit ausgebildet sein können.

Die erste Kommunikationseinrichtung und die zweite Kommunikationseinrichtung können sowohl für eine unidirektionale Kommunikation als auch für eine bidirektionale Kommunikation ausgelegt sein.

Im Falle der unidirektionalen Kommunikation stellt die zweite Kommunikationseinrichtung lediglich Informationen bereit, die dann von der ersten Kommunikationseinrichtung erfasst werden können. Hierzu kann die zweite Kommunikationseinrichtung beispielsweise wenigstens einen an dem Werbeträger angeordneten Strichcode umfassen, während die erste Kommunikationseinrichtung ein Strichcode-Lesegerät zum Erfassen des wenigstens einen Strichcodes aufweist. Der Strichcode kann alle für die Erstellung der Gutschrift erforderlichen Angaben umfassen.

Ist auf der Oberfläche des Werbeträgers eine Mehrzahl von Strichcodes verteilt angeordnet, so kann neben dem bloßen Vorhandensein des Werbeträgers an dem Fahrzeug von der ersten Kommunikationseinrichtung zusätzlich auch die Unversehrtheit des Werbeträgers überprüft werden. Der Werbeträger kann in diesem Falle beispielsweise dann als unversehrt angesehen werden, wenn die erste Kommunikationseinrichtung das Vorhandensein aller ursprünglich vorgesehenen Strichcodes erfasst und bestätigt.

Zur Erhöhung der Sicherheit des Verfahrens kann es vorteilhaft sein, wenn der Fahrzeughalter bzw. Fahrzeugführer nicht weiß bzw. nicht erkennen kann, wo die von der zweiten Kommunikationseinrichtung bereitgestellte Information auf der Oberfläche des Werbeträgers angeordnet ist. Für diesen Fall kann vorgesehen sein, dass die erste Kommunikationseinrichtung eine Kamera und eine Bildverarbeitungseinheit oder/und Mustererkennungseinheit umfasst zur Erkennung wenigstens eines Oberflächenmerkmals des Werbeträgers, welches Oberflächenmerkmal die zweite Kommunikationseinrichtung bildet.

Durch Anordnung einer Mehrzahl derartiger Oberflächenmerkmale auf der Oberfläche des Werbeträgers kann wiederum die Überprüfung auch der Unversehrtheit des Werbeträgers ermöglicht werden.

Wie vorstehend bereits erwähnt, kann die Kommunikation zwischen den beiden Kommunikationseinrichtungen auch als bidirektionale Kommunikation ausgelegt sein. Hierzu kann die erste Kommunikationseinrichtung die zweite Kommunikationseinrichtung um die erforderlichen Informationen "bitten", woraufhin die zweite Kommunikationseinrichtung diese Informationen aktiv an die erste Kommunikationseinrichtung übermittelt. Beispielsweise kann die erste Kommunikationseinrichtung einen Interrogator umfassen, welcher mit einem Transponder der zweiten Kommunikationseinrichtung in Datenaustauschverbindung tritt. Der Transponder der zweiten Kommunikationseinrichtung kann beispielsweise ein passiver Transponder sein, d.h. ein Transponder ohne eigene Energieversorgung. Derartige passive Transponder sind im Stand der Technik an sich bekannt und sollen daher hier nicht näher erläutert werden.

Wie vorstehend bereits angesprochen wurde, ist eine Überprüfung des Werbeträgers auf Unversehrtheit von Vorteil. Hierzu kann vorgesehen sein, dass die zweite Kommunikationseinrichtung wenigstens eine Sensoreinheit zur Erfassung der Unversehrtheit des Werbeträgers umfasst. Diese kann beispielsweise eine Leiterschleife und einen Widerstandssensor umfassen,
wobei sich die Leiterschleife vorteilhafterweise zumindest in Oberflächenbereichen hoher Bedeutung fürdie Erzielung des gewünschten Werbeeffekts erstreckt. Mit Hilfe des Widerstandssensors kann erfasst werden, ob die Leiterschleife unterbrochen ist oder nicht. Falls die Leiterschleife nicht unterbrochen ist, kann hieraus geschlossen werden, dass der Werbeträger unversehrt ist.

Insbesondere für den Fall bidirektionaler Kommunikation zwischen den beiden Kommunikationseinrichtungen wird vorgeschlagen, dass die zweite Kommunikationseinrichtung zum Empfangen und Speichern von Daten ausgebildet ist, welche ihr von der ersten Kommunikationseinrichtung übermittelt werden. Beispielsweise können die beiden Kommunikationseinrichtungen dann, wenn das Vorhandensein und ggf. die Unversehrtheit des Werbeträgers erfasst worden ist und auch kein anderer Hinderungsgrund für das Erstellen einer Gutschrift vorliegt, ein Zeitsignal austauschen und kann wenigstens eine der beiden Kommunikationseinrichtungen die dem aktuellen Zeitpunkt entsprechende Zeit speichern.

Aufgrund dieser Zeitinformation kann beim nächsten Aufenthalt oder bei der nächsten Vorbeifahrt des Fahrzeugs an einer Kontrollstelle ermittelt werden, ob seit der vorhergehenden Erstellung einer Gutschrift ein vorbestimmtes Zeitintervall abgelaufen ist oder nicht. Sollte seit der letzten Erstellung einer Gutschrift zu wenig Zeit vergangen sein, so könnte dies auch bei Vorhandensein und Unversehrtheit des Werbeträgers einen Grund darstellen, das erneute Erstellen einer Gutschrift zu verweigern. Durch diese Maßnahme kann nämlich in einfacher Weise verhindert werden, dass der Fahrzeughalter eines mit einem Werbeträger ausgerüsteten Fahrzeugs nach einem durch eine Gutschrift kostenbegünstigten Betanken des Fahrzeugs den Tank in betrügerischer Absicht entleert und sich hierauf wieder zur Tankstelle begibt, um das Fahrzeug unter Inanspruchnahme einer Kostenvergünstigung erneut zu betanken.

Die Länge dieses vorbestimmten Zeitintervalls kann zwischen dem Fahrzeughalter und dem werbenden Unternehmen in Abhängigkeit des Fahreinsatzes vereinbart werden, beispielsweise in Abhängigkeit von der Strecke, die das Fahrzeug in einem verbestimmten Zeitraum zurückzulegen hat. Hierdurch kann das werbende Unternehmen Fahrzeughaltern, deren Fahrzeug sehr viel gefahren wird und somit eine hohe Werbewirksamkeit entfaltet, eine bevorzugte Behandlung zukommen lassen. Die Einhaltung der vereinbarten Fahrleistung kann beispielsweise bei gelegentlichen Sichtüberprüfungen des Fahrzeugs überwacht werden.

Als Weiterbildung der Erfindung kommt ferner in Frage, dass eine der Kommunikationseinrichtungen Daten über den Zeitpunktder Anbringung des Werbeträgers an dem Fahrzeug bereitstellt. Sollte nämlich das werbende Unternehmen oder eine für dieses tätig werdende Agentur die Verträge mit den Fahrzeughaltern stets über eine vorbestimmte Zeitdauer abschließen, so genügt diese Information, um festzustellen, ob die Vertragsdauer bereits abgelaufen ist, und um ggf. die Ausstellung einer Gutschrift nach Ablauf der Vertragsdauer zu verhindern.

Sollten hingegen flexible Vertragszeiträume erwünscht sein, so kann ferner vorgesehen sein, dass die zweite Kommunikationseinrichtung Daten über die Dauer der vereinbarten Anbringung des Werbeträgers an dem Fahrzeug bereitstellt.

Insbesondere dann, wenn an dem Fahrzeug ferner eine aktive Fahrzeug-Identifizierungseinrichtung vorgesehen ist, welche für die erste Kommunikationseinrichtung das Fahrzeug identifizierende Daten bereitstellt, ist es von Vorteil, wenn auch die zweite Kommunikationseinrichtung Daten über das Fahrzeug bereitstellt, an dem der Werbeträger angebracht sein sollte. Durch einen Vergleich der Daten von der Fahrzeug-Identifizierungseinrichtung einerseits und der zweiten Kommunikationseinrichtung andererseits kann überprüft werden, ob der Werbeträger auch tatsächlich an dem vertragsgemäß vereinbarten Fahrzeug angebracht ist. Dies erhöht die Sicherheit der erfindungsgemäßen Vorrichtung gegenüber betrügerischem Missbrauch.

In Weiterbildung der Erfindung kann ferner eine Annäherungs-Erfassungseinrichtung vorgesehen sein, welche bei Erfassung einer Annäherung des Fahrzeugs an die Kontrollstelle die erste Kommunikationseinrichtung oder/und die zweite Kommunikationseinrichtung aktiviert. Dabei kann die Annäherungs-Erfassungeinrichtung eine, beispielsweise in einer Fahrfläche der Kontrollstelle verlegte, Induktionsschleife umfassen.

Der Werbeträger kann in an sich bekannter Weise eine mit der Werbung bedruckte Folie umfassen, also einen im wesentlichen zweidimensionalen Körper. Es ist jedoch ebenso möglich, dass der Werbeträger einen dreidimensionalen Körper umfasst, beispielsweise eine stilisierte Flasche oder dergleichen, die auf dem Dach des Fahrzeugs angeordnet sein kann. Schließlich ist es auch denkbar, daß die Werbung - zumal bei längerer Vertragsdauer - auch durch Lackieren aufgebracht sein kann. Der Werbeträger ist in diesem Fall die Lackierung des Fahrzeugs.

In beiden Fällen ist es aber vorteilhaft, wenn der Werbeträger derart ausgebildet oder/und an dem Fahrzeug anordenbar ist, dass er einerseits ohne Beschädigung des Fahrzeugs, andererseits aber nur unter Zerstörung des Werbeträgers selbst wieder vom Fahrzeug abnehmbar ist. Für den Fall von Werbefolien kann dies beispielsweise durch Verwendung eines vom Fahrzeuglack leicht wieder ablösbaren Klebstoffs auf der Folienrückseite und durch Vorsehen von Einschnitten an definierten Stellen des Umfangsrands der Folie oder der Folienfläche bewerkstelligt werden, wie dies beispielsweise von Autobahn-Vignetten in der Schweiz oder Österreich oder TÜV-Plaketten in Deutschland her bekannt ist. Beim Ablösen der Folie von dem Fahrzeug reißt die Folie an den dafür vorgesehenen Stellen ein, wodurch sie unbrauchbar wird. Eine Tendenz zu leichtem Einreißen durch den Versuch eines nicht vertragsgemäßen Ablösens der Folie kann überdies durch geeignete Wahl des Kunststoffmaterials für die Folie begünstigt werden. Im Falle des Vorsehens der vorstehend angesprochenen, zur Unversehrtheits-Prüfung dienenden Leiterschleife sollte diese zumindest im Bereich der vorstehend beschriebenen Soll-Einreißstellen im Bereich des Folienrands verlaufen.

Gemäß einem weiteren Gesichtspunkt betrifft die Erfindung ein Verfahren zum bargeldlosen Entrichten des Entgelts für die Anbringung wenigstens eines Werbeträgers an einem Fahrzeug. Hinsichtlich der möglichen Verfahrensvarianten und der damit erzielbaren Vorteile sei auf die vorstehende Diskussion der erfindungsgemäßen Vorrichtung verwiesen.

Schließlich betrifft die Erfindung auch einen mit einem Transponder, vorzugsweise einem passiven Transponder, ausgestatteten und zur Anbringung an einem Fahrzeug ausgebildeten Werbeträger. Auch hinsichtlich der mit diesem Werbeträger erzielbaren Vorteile sei auf die vorstehende Diskussion verwiesen.

Die Erfindung wird im Folgenden an einem Ausführungsbeispiel anhand der beigefügten Zeichnungen näher erläutert werden. Es stellt dar:
- Fig. 1: ein an einer Tankstelle haltendes Fahrzeug mit Werbeträger; und
- Fig. 2a-2c: schematische Darstellungen verschiedener Ausführungsformen erfindungsgemäßer Werbefolien.

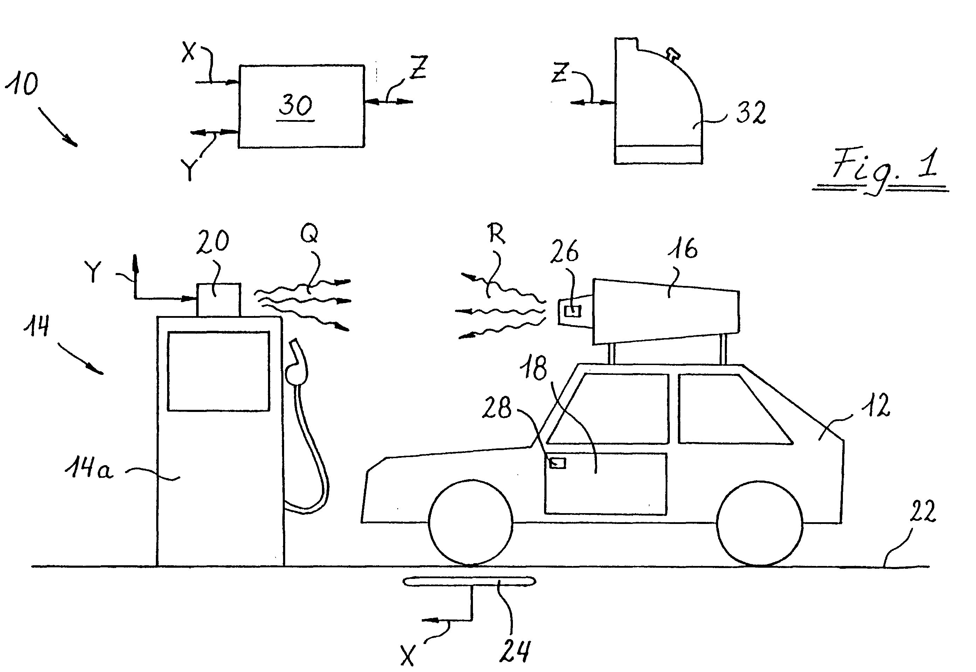

In Fig. 1 ist eine erfindungsgemäße Vorrichtung zum automatisierten, bargeldlosen Entrichten des Entgelts für die Anbringung eines Werbeträgers an einem Fahrzeug ganz allgemein mit 10 bezeichnet.

Ein Fahrzeug 12 befindet sich im Bereich einer Kontrollstelle 14. Als Kontrollstelle 14 dient im dargestellten Ausführungsbeispiel eine Tankstelle, was in Fig. 1 schematisch durch eine Zapfsäule 14a angedeutet ist. Auf dem Dach des Fahrzeugs 12 ist als Werbeträger 16 die Skulptur einer Tube angeordnet. Zusätzlich oder alternativ kann an dem Fahrzeug aber auch im Bereich dessen Seitenflächen eine Werbefolie 18 angeordnet sein.

Im Bereich der Zapfsäule 14a der Tankstelle 14 ist eine erste Kommunikationseinrichtung 20 angeordnet, die im vorliegenden Ausführungsbeispiel von einem Interrogator gebildet ist. Der Interrogator 20 tritt dann, wenn das Fahrzeug 12 in den Bereich einer in der Fahrfläche 22 verlegten Induktionsschleife 24 gelangt, mit einem Transponder 26 der Werbeskulptur 16 bzw. einem Transponder 28 der Werbefolie 18 in Datenaustauschverbindung. Die Transponder 26 bzw. 28 bilden gemäß der vorliegenden Erfindung jeweils alleine oder gemeinsam die zweite Kommunikationseinrichtung.

Genauer gesagt gibt die Induktionsschleife 24 bei Annäherung des Fahrzeugs 12 über eine Datenleitung X an eine zentrale Steuereinheit 30 ein Annäherungssignal aus. Daraufhin aktiviert die Steuereinheit 30 über eine Datenleitung Y den Interrogator 20, der infolge dieser Aktivierung ein Abfragesignal Q an den Transponder 26 oder/und den Transponder 28 emittiert. (Der Einfachheit halber wird im Folgenden lediglich auf den Transponder 26 Bezug genommen werden.)

Das in Reaktion auf das Abfragesignal Q vom Transponder 26 an den Interrogator zurückgesendete Antwortsignal R kann eine ganze Reihe von Informationen enthalten, die von dem Interrogator 20 über die Datenleitung Y an die zentrale Steuereinheit 30 weitergeleitet werden. Diese Informationen können beispielsweise umfassen:
- die Information, dass der Werbeträger 16 an dem Fahrzeug 12 vorhanden ist;
- die Information, dass der Werbeträger 16 unversehrt ist;
- die Information, seit wann der Werbeträger 16 an dem Fahrzeug 12 angebracht ist;
- die Information, wie lange der Vertrag zwischen dem Halter des Fahrzeugs 12 und dem werbenden Unternehmen läuft;
- die Information, an welchem Fahrzeug der Werbeträger 16 angebracht sein soll;
- die Information, wieviel Zeit seit der letzten Erstellung einer Gutschrift vergangen ist;
- die Information, ob und wenn ja in welcher Höhe ein etwaiges Guthaben nicht in Anspruch genommener Gutschriften besteht;
und dergleichen mehr Informationen.

Auf Grundlage der ihr übermittelten Informationen bestimmt die zentrale Steuereinheit 30, ob dem Halter des Fahrzeugs 12 bei diesem Tankstopp eine Gutschrift zusteht oder nicht. Ist beispielsweise seit dem letzten Tankstopp eine vorbestimmte Zeit, beispielsweise eine Woche, vergangen und der Vertrag zwischen dem Fahrzeughalter und dem werbenden Unternehmen noch nicht abgelaufen, und ist darüber hinaus der Werbeträger 16 an dem Fahrzeug 12 in unversehrtem Zustand angebracht, so bestimmt die Steuereinheit 30, dass dem Halter des Fahrzeugs 12 eine Gutschrift zusteht und übermittelt über eine Signalleitung Z an einen Kassenautomaten 32 ein entsprechendes Signal.

Nimmt der Fahrzeugführer die Gutschrift beim Bezahlen der Tankrechnung in Anspruch, so kann der ihm gutgeschriebene Betrag sofort mit dem für den Kraftstoff zu entrichtenden Betrag verrechnet werden. Nimmt der Fahrzeugführer die Gutschrift jedoch nicht oder nicht vollständig in Anspruch, so informiert der Kassenautomat 32 die zentrale Steuereinheit 30 hiervon, welche ein entsprechendes Signal an den Interrogator 20 weiterleitet. Der Interrogator 20 übermittelt dem Transponder 26 ein Gutschriftsignal über die Höhe des nicht in Anspruch genommenen Teils der Gutschrift, was sich der Transponder 26 in einem Speicher 50 "merkt" (siehe Fig. 2c). Dieses in dem Speicher abgelegte Guthaben kann bei einem der folgenden Tankstopps jederzeit in Anspruch genommen werden.

In den Figuren 2a bis 2c sind schematisch drei Beispiele für Ausführungsformen von Werbefolien 18 dargestellt.

Gemäß Fig. 2a sind auf der Werbefolie 18a vier Strichcode-Felder 34a, 34b, 34c und 34d verteilt angeordnet, deren Existenz mittels eines der ersten Kommunikationseinrichtung 20 zugeordneten Lesegeräts 36 erfasst werden kann. Nur wenn alle vier Strichcode-Felder 34a bis 34d vorhanden sind, wird die Werbefolie 18a als unversehrt anerkannt, was eine Grundvoraussetzung für das Ausstellen einer Gutschrift ist.

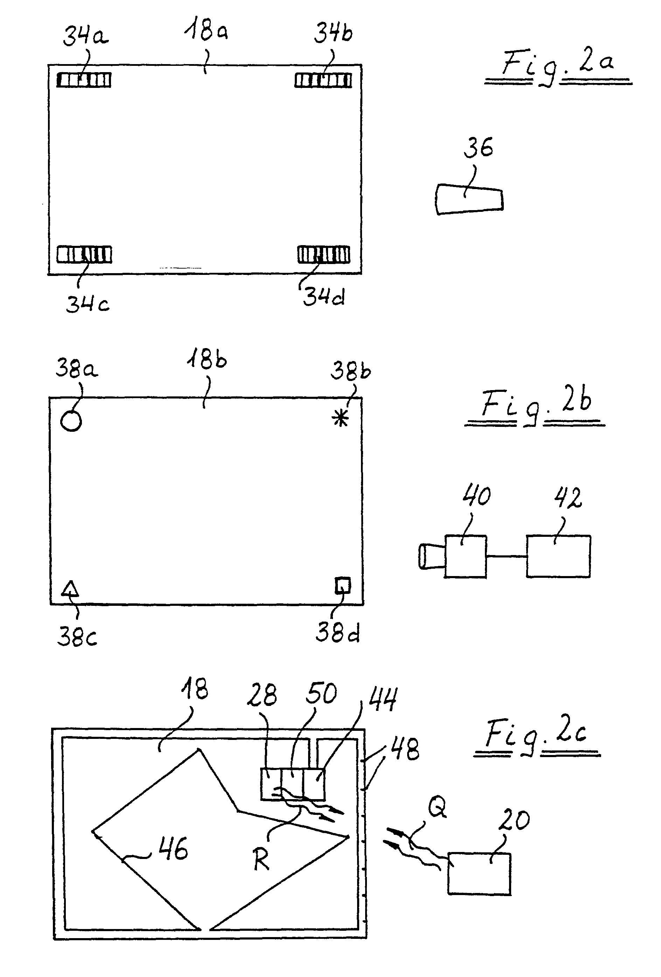

Gemäß Fig. 2b sind auf der Oberfläche der Werbefolie 18b vier Oberflächenmerkmale 38a, 38b, 38c und 38d verteilt angeordnet, die im vorliegenden Fall stilisiert als Kreis, Stern, Dreieck und Quadrat dargestellt sind. Bei der Gestaltung dieser Oberflächenmerkmale hat man völlig freie Hand. Es ist lediglich erforderlich, dass sie zur eindeutigen Codierung bestimmter Informationsgehalte geeignet sind. Eine Kamera 40 nimmt ein Bild von der Werbefolie 18b auf, aus welchem eine Bildverarbeitungs- oder/und Mustererkennungseinheit 42 die Oberflächenmerkmale 38a bis 38d extrahiert. Nur wenn sämtliche Oberflächenmerkmale 38a bis 38d vorhanden sind, wird die Werbefolie 18b als unversehrt anerkannt.

Gemäß Fig. 2c umfasst die Werbefolie 18 einen passiven Transponder 26, d.h. einen Transponder, der über keine eigene Energieversorgung verfügt, sondern die zu seinem Betrieb erforderliche Energie aus dem Abfragesignal Q des Interrogators 20 bezieht. Dem Transponder 26 ist ein Widerstandssensor 44 zugeordnet, der mit einer Leiterschleife 46 verbunden ist. Die Leiterschleife 46 verläuft in dem dargestellten Ausführungsbeispiel zunächst im wesentlichen vollständig längs des Umfangsrands der Werbefolie 18 und überstreicht anschließend noch die gesamte Fläche der Werbefolie 18. Nur dann, wenn der Widerstand der Leiterschleife 46 einen Wert aufweist, der niedriger ist als ein vorbestimmter Wert, wird die Werbefolie 18 als unversehrt anerkannt. Ist die Werbefolie 18 jedoch in ihrem Randbereich eingerissen und infolgedessen die Leiterschleife 46 durchtrennt, so wird die Werbefolie als beschädigt angesehen. Selbstverständlich ist es möglich, eine Mehrzahl von Leiterschleifen in verschiedenen Abständen vom Rand der Folie 18 anzuordnen, um so verschiedene Beschädigungsgrade erfassen zu können.

Um sicherzustellen, dass die Werbefolie 18 beim Abziehen vom Lack des Fahrzeugs 12 irreparabel beschädigt wird, können am Rand der Folie 18 Einschnitte 48 vorgesehen sein, wie sie in Fig. 2c beispielhaft am rechten Rand der Folie 18 angedeutet sind. Diese Einschnitte 48 dienen als Soll-Einreißstellen, die ein zerstörungsfreies Abziehen der Folie vom Fahrzeug 12 verhindern. Obgleich dies in Fig. 2c nicht dargestellt ist, können auch im Flächenbereich der Folie 18 derartige Soll-Einreißstellen vorgesehen sein.

Obgleich die Erfindung vorstehend am Beispiel einer Tankstelle als Kontrollstelle 14 erläutert wurde, sei darauf hingewiesen, dass die Erfindung auch an anderen Arten von Kontrollstellen verwirklicht werden kann, beispielsweise an Mautstellen oder Parkhäusern. In diesem Fall kann die erste Kommunikationseinrichtung 20 im Bereich einer Sperre oder Schranke der Mautstelle angeordnet sein. Derartige Mautstellen sind beispielsweise aus Frankreich, Italien und den U.S.A. bekannt. Als Kontrollstellen kommen ferner fahrbahnferne Relaisstationen von Mobiltelefon-Netzen, Induktionsschleifen-Einrichtungen in Fahrbahnen, die Erde umkreisende Satelliten und dergleichen in Betracht.

Ferner sei darauf hingewiesen, dass dann, wenn vorstehend von "Tanken" oder "Kraftstoff" die Rede war, die Zufuhr jeder Art von Energieträger zu dem Fahrzeug 12 gemeint war. Als Tanken in diesem Sinne ist also beispielsweise auch das Wiederaufladen von Batterien eines Elektrofahrzeugs zu verstehen. Als Kraftstoffe kommen dementsprechend neben Otto-Kraftstoff und Diesel-Kraftstoff auch Alkohole, Öle, Gas, Wasserstoff und dergleichen mehr in Betracht.

Die Erfindung betrifft ein Verfahren gemäß dem Anspruch 28. Es ist allgemein bekannt, an Kraftfahrzeugen Werbung in verschiedener Weise anzubringen. Solche Werbung kann von einer Firma auch für Kraftfahrzeuge bereitgestellt werden. Der Besitzer des Kraftfahrzeugs erhält dann im allgemeinen eine Vergütung für das Führen der Werbung am Fahrzeug. Diese Vergütung kann zeitabhängig verabredet werden, so daß der Eigner des Kraftfahrzeugs nach Ablauf der vereinbarten Werbungszeit eine andere Werbung an seinem Fahrzeug anbringen kann.

Um nun zu gewährleisten, daß die Werbung während der vereinbarten Führungszeit auch tatsächlich angebracht ist, unternimmt die die Werbung bzw. den Auftrag vergehende Firma im allgemeinen Kontrollen, um von Zeit zu Zeit das bestimmungsgemäße Vorhandensein der Werbung dieser Firma am Kraftfahrzeug zu prüfen. Dieses Überwachungsverfahren erfordertdaher eine Überwachungsarbeit, die erhebliche Kosten verursacht.

Durch die WO-A1-94/28526 ist ein Verfahren zur Eingabe von Daten, insbesondere Werbedaten, in Fahrzeuge bekannt, wenn diese an einer Tankstelle zum Tanken angeschlossen sind. Die Daten Können dabei abhängig von Informationen eingegeben werden, die vom Fahrzeug empfangen werden und insbesondere Kennzeichnungen des Fahrers, des Fahrzeugs und des Bestimmungsorts des Fahrzeugs enthalten. Die Dateneingabe kann dabei mittels einer an einer Zapfpistole angebrachten Sendeeinrichtung und einer über dem Tankeinfüllstutzen am Fahrzeug angebrachten Empfangseinrichtung vorgenommen werden.

Die Vergütung oder Teilvergütung für das Führen von Werbung wird mit einer Kraftstoffgutschrift abgegolten. Diese Kraftstoffgutschrift wird an Tankstellen nur dann eingelöst, wenn eine Prüfung auf Vorhandensein der Werbung am Kraftfahrzeug positiv ausgefallen ist.

Vorzugsweise wird die Einlösung dieser Gutschrift gemäß einer weiteren Ausbildung des Verfahrens davon abhängig gemacht, daß seit der letzten Gutschriftteileinlösung eine bestimmte Zeit z.B., eine Woche oder ein Monat, vergangen ist. Dadurch wird vermieden, daß der Tank des Kraftfahrzeugs vorzeitig entleert und wieder gefüllt wird, bevor ein nachfolgendes Kontrollintervall angebrochen ist. Eine intervallmäßige Kontrolle und Honorierung der Werbeanbringung ist möglich. Wie vorstehend bereits angesprochen worden ist, kann die Länge der vorbestimmte Zeit in Abhängigkeit einer zwischen dem Fahrzeughalter und dem werbenden Unternehmen vereinbarten Fahrleistung gewählt werden.

Gemäß einer weiteren Ausbildung der Erfindung erfolgt die Prüfung des bestimmungsgemäßen Vorhandenseins der Werbeanbringung mittels eines Lesegeräts, beispielsweise mittels eines Scanners). Wird bei dieser Prüfung festgestellt, daß die auf der Kraftstoffgutschrift angegebene Werbung auch tatsächlich am Fahrzeug angebracht ist, wird der Wert des gezapften Kraftstoffs mit dieser Gutschrift verrechnet. Im anderen Fall muß der getankte Kraftstoff ohne Verrechnung mit der Gutschrift bezahlt werden.

Gemäß einer weiteren Ausbildung der Erfindung hat die Kraftstoffgutschrift die Form einer abbuchungsfähigen Chipkarte oder Speichermedium. Diese Chipkarte oder Speichermedium wird nach dem Tanken vom Tankwart in Empfang genommen, der sie zum Abbuchen in sein Lese- und Abbuchungsgerät steckt. Das Medium kann Daten zum Fahrzeug und seinem Besitzer speichern. Der Abbuchungsbetrag belastet dabei das Konto der Firma, für die geworben wird.

Gemäß einer weiteren Ausbildung der Erfindung ist ein die Kraftstoffgutschrift enthaltendes, abbuchungsfähiges Medium am Fahrzeug, während die Zapfpistole mit einer Einrichtung zum Abbuchen des gezapften Kraftstoffs auf dem Medium und auf dem Konto der Firma in der Tankstelle versehen ist. Dazu braucht diese Einrichtung der Zapfpistole nur in die Nähe des Mediums gebracht werden.

Gemäß einer weiteren Ausbildung der Erfindung kann die Unversehrtheit der Werbung ermittelt werden. Dabei läßt das Medium die Abbuchung nur dann zu, wenn eine die Unversehrtheit der Werbeflächen bestätigende Meldung einer Einrichtung vorliegt. Dadurch kann das Vorhandensein der Werbeflächen automatisch geprüft werden. Diese Einrichtung kann beispielsweise mit mehreren Sensoren oder Strichcodes arbeiten, die über die Werbeflächen verteilt sind und bestimmte Eigenschaften der Werbeflächen feststellen.

## Patentansprüche

1. Vorrichtung (10) zum automatisierten bargeldlosen Entrichten des Entgelts für die Anbringung wenigstens eines Werbeträgers (16) an einem Fahrzeug (12), umfassend:
- eine an einer Kontrollstelle (14) angeordnete erste Kommunikationseinrichtung (20) und eine an dem Werbeträger (16) angeordnete zweite Kommunikationseinrichtung (26), wobei die zweite Kommunikationseinrichtung (26) für die erste Kommunikationseinrichtung (20) Informationen bereitstellt, anhand derer das Vorhandensein des Werbeträgers (16) an dem Fahrzeug (12) überprüfbar ist, sowie
- eine Einrichtung (32) zum Erstellen einer Gutschrift als Entgelt für die Anbringung des Werbeträgers (16) an dem Fahrzeug (12) in Abhängigkeit des Ergebnisses der Vorhandenseins-Überprüfung.

2. Vorrichtung nach Anspruch 1,
**dadurch gekennzeichnet, dass** die Kontrollstelle eine Tankstelle (14) oder Mautstelle oder Induktionsschleifen-Einrichtung in der Fahrbahn oder eine Relaisstation beispielsweise eines Mobiltelefon-Netzes ist oder ein die Erde umkreisender Satellit.

3. Vorrichtung nach Anspruch 1 oder 2,
**dadurch gekennzeichnet, dass** die zweite Kommunikationseinrichtung wenigstens einen an dem Werbeträger (18a) angeordneten Strichcode (34a - 34d) umfasst, und dass die erste Kommunikationseinrichtung ein Strichcode-Lesegerät (36) zum Erfassen des wenigstens einen Strichcodes aufweist.

4. Vorrichtung nach Anspruch 3,
**dadurch gekennzeichnet**, dassdiezweite Kommunikationseinrichtung eine Mehrzahl von Strichcodes (34a - 34d) umfasst, welche auf der Oberfläche des Werbeträgers verteilt angeordnet sind.

5. Vorrichtung nach Anspruch 1 oder 2,
**dadurch gekennzeichnet, dass** die erste Kommunikationseinrichtung eine Kamera (40) und eine Bildverarbeitungseinheit oder/und Mustererkennungseinheit (42) umfasst zur Erkennung wenigstens eines Oberflächenmerkmals (38a - 38d) des Werbeträgers (18b), welches die zweite Kommunikationseinrichtung bildet.

6. Vorrichtung nach Anspruch 5,
**dadurch gekennzeichnet, dass** die zweite Kommuni kationseinrichtung eine Mehrzahl von Oberflächenmerkmalen (38a - 38d) umfasst, welche auf der Oberfläche des Werbeträgers (18b) verteilt angeordnet sind.

7. Vorrichtung nach Anspruch 1 oder 2,
**dadurch gekennzeichnet, dass** die erste Kommunikationseinrichtung einen Interrogator (20) umfasst, welcher mit einem Transponder (26) der zweiten Kommunikationseinrichtung in Datenaustauschverbindung tritt.

8. Vorrichtung nach Anspruch 7,
**dadurch gekennzeichnet, dass** der Transponder (26) ein passiver Transponder ist.

9. Vorrichtung nach einem der Ansprüche 1 bis 8,
**dadurch gekennzeichnet, dass** die zweite Kommunikationseinrichtung (26) wenigstens eine Sensoreinheit (44/46) zur Erfassung der Unversehrtheit des Werbeträgers (18c) umfasst.

10. Vorrichtung nach Anspruch 9,
**dadurch gekennzeichnet, dass** die Sensoreinheit eine Leiterschleife (46) und einen Widerstandssensor (44) umfasst.

11. Vorrichtung nach einem der Ansprüche 1 bis 10,
**dadurch gekennzeichnet, dass** die zweite Kommunikationseinrichtung (26) zum Empfangen und Speichern von Daten ausgebildet ist, welche ihr von der ersten Kommunikationseinrichtung (20) übermittelt werden.

12. Vorrichtung nach einem der Ansprüche 1 bis 11,
**dadurch gekennzeichnet**,dassdiezweite Kommunikationseinrichtung (26) Daten über den Zeitpunkt der vorhergehenden Gutschrift-Erstellung bereitstellt.

13. Vorrichtung nach einem der Ansprüche 1 bis 12,
**dadurch gekennzeichnet**, dassdiezweite Kommunikationseinrichtung (26) Daten über den Zeitpunkt der Anbringung des Werbeträgers (16) an dem Fahrzeug (12) bereitstellt.

14. Vorrichtung nach einem der Ansprüche 1 bis 13,
**dadurch gekennzeichnet, dass** die zweite Kommunikationseinrichtung (26) Daten über die Dauer der vereinbarten Anbringung des Werbeträgers (16) an dem Fahrzeug (12) bereitstellt.

15. Vorrichtung nach einem der Ansprüche 1 bis 14,
**dadurch gekennzeichnet, dass** die zweite Kommunikationseinrichtung (26) Daten über das Fahrzeug (12), auf dem der Werbeträger (16) angebracht ist, bereitstellt.

16. Vorrichtung nach einem der Ansprüche 1 bis 15,
**dadurch gekennzeichnet, dass** sie ferner eine Annäherungs-Erfassungseinrichtung (24) umfasst, welche bei Erfassung einer Annäherung des Fahrzeugs (12) an die Kontrollstelle (14) die erste Kommunikationseinrichtung (20) oder/und die zweite Kommunikationseinrichtung (26) aktiviert.

17. Vorrichtung nach Anspruch 16,
**dadurch gekennzeichnet, dass** die Annäherungs-Erfassungseinrichtung eine, beispielsweise in einer Fahrfläche (22) verlegte, Induktionsschleife (24) umfasst.

18. Vorrichtung nach einem der Ansprüche 1 bis 17,
**dadurch gekennzeichnet, dass** der Werbeträger eine Folie (18) umfasst.

19. Vorrichtung nach einem der Ansprüche 1 bis 17,
**dadurch gekennzeichnet, dass** der Werbeträger einen dreidimensionalen Körper (16) umfasst.

20. Vorrichtung nach einem der Ansprüche 1 bis 19,
**dadurch gekennzeichnet, dass** der Werbeträger (18) derart ausgebildet oder/und an dem Fahrzeug anordenbar ist, dass er einerseits ohne Beschädigung des Fahrzeugs (12), andererseits aber unter Zerstörung des Werbeträgers (18) selbst wieder vom Fahrzeug (18) abnehmbar ist.

21. Verfahren zum bargeldlosen Entrichten des Entgelts für die Anbringung wenigstens eines Werbeträgers (16, 18) an einem Fahrzeug (12) unter Einsatz einer Vorrichtung nach einem der Ansprüche 1 bis 20, das Verfahren umfassend die Schritte:
a. Überprüfen des Vorhandenseins des Werbeträgers (16, 18) an dem Fahrzeug (12) an einer Kontrollstelle (14) und
b. Erstellen einer Gutschrift als Entgelt für die Anbringung des Werbeträgers (16, 18) in Abhängigkeit des Ergebnisses der Überprüfung im Schritt a.

22. Verfahren nach Anspruch 21,
**dadurch gekennzeichnet, dass** man an der Kontrollstelle (14) eine erste Kommunikationseinrichtung (20) und an dem Werbeträger (16, 18) eine zweite Kommunikationseinrichtung (26, 28) vorsieht.

23. Verfahren nach Anspruch 21 oder 22,
**dadurch gekennzeichnet, dass** die Gutschrift nur dann erstellt wird, wenn die Unversehrtheit des Werbeträgers (16, 18) erfasst worden i st.

24. Verfahren nach einem der Ansprüche 21 bis 23,
**dadurch gekennzeichnet, dass** die Gutschrift nur dann erstellt wird, wenn seit dem Zeitpunkt der letzten Erstellung eine vorbestimmte Zeitdauer vergangen ist.

25. Verfahren nach einem der Ansprüche 21 bis 24,
**dadurch gekennzeichnet, dass** die Gutschrift durch sofortiges Verrechnen mit einem an der Kontrollstelle (14) zu entrichtenden Geldbetrag erstellt wird.

26. Verfahren nach einem der Ansprüche 21 bis 24,
**dadurch gekennzeichnet, dass** die Gutschrift in Form eines Gutschrift-Beleges erstellt wird.

27. Verfahren nach einem der Ansprüche 21 bis 24,
**dadurch gekennzeichnet, dass** die Gutschrift durch einen entsprechenden Eintrag auf einem schreib-/lesefähigen Speichermedium (50) erstellt wird.

28. Verfahren zur Prüfung und Honorierung des Vorhandenseins von Werbung einer Firma an Kraftfahrzeugen in bestimmten Zeitintervallen, **gekennzeichnet durch** firmenbezogene und von den Fahrern der Kraftfahrzeuge verwertbare Kraftstoffgutschriften, die an Tankstellen nach einer mittels eines Lesegeräts (z. B. Scanner) automatisch erfolgten Prüfung des Vorhandenseins der Werbung einlösbar sind, wobei die Prüfung mittels einer Vorrichtung (10) vorgenommen wird, umfassend:
- eine an der Kontrollstelle (14) angeordnete erste Kommunikationseinrichtung (20) und eine an dem Werbeträger (16) angeordnete zweite Kommunikationseinrichtung (26), wobei die zweite Kommunikationseinrichtung (26) für die erste Kommunikationseinrichtung (20) Informationen bereitstellt, anhand derer das Vorhandensein des Werbeträgers (16) an dem Fahrzeug überprüfbar ist, sowie
- eine Einrichtung (32) zum Erstellen einer Gutschrift als Entgelt für die Anbringung des Werbeträgers (16) an dem Fahrzeug (12) in Abhängigkeit des Ergebnisses der Vorhandenseins-Überprüfung.

29. Verfahren nach Anspruch 28,
**dadurch gekennzeichnet, daß** die Einlösung dieser Gutschrift davon abhängig gemachtist, daß seitder letzten Gutschriftteileinlösung eine bestimmte Zeit vergangen ist.

30. Verfahren nach Anspruch 28 oder 29,
**dadurch gekennzeichnet, daß** die Kraftstoffgutschrift die Form einer abbuchungsfähigen Chipkarte hat.

31. Verfahren nach Anspruch 28,
**dadurch gekennzeichnet, daß** ein die Kraftstoffgutschrift enthaltendes, abbuchungsfähiges Medium angebracht ist und daß die Zapfpistole mit einer Einrichtung zum Abbuchen des gezapften Kraftstoffs auf dem Medium und auf dem Konto der Firma in der Tankstelle versehen ist.

32. Verfahren nach Anspruch 31,
**dadurch gekennzeichnet, daß** das Medium die Abbuchung nur dann zuläßt, wenn eine positive Meldung einer fahrzeugeigenen Einrichtung vorliegt, die mit dem Medium in Verbindung steht und die Unversehrtheit der Werbeflächen ermittelt.

## Claims

1. A device (10) for automated cashless payment of the fee for the attachment of at least one advertising medium (16) to a vehicle (12), comprising:
- a first communication device (20) disposed at a control point (14) and a second communication device (26) disposed on the advertising medium (16), wherein the second communication device (26) supplies data for the first communication device (20) by means of which the presence of the advertising medium (16) on the vehicle (12) can be verified, as well as
- a device (32) for issuing a credit as payment for the attachment of the advertising medium (16) to the vehicle (12) depending on the result of the presence verification.

2. Device according to Claim 1, **characterised in that** the control point is a filling station (14), a toll booth, an induction loop device in the carriageway, a relay station for example of a mobile telephone network, or a satellite orbiting the earth.

3. Device according to Claim 1 or 2, **characterised in that** the second communication device comprises at least one bar code (34a-34d) disposed on the advertising medium (18a), and **in that** the first communication device has a bar code reading device (36) for detecting the at least one bar code.

4. Device according to Claim 3, **characterised in that** the second communication device comprises a number of bar codes (34a-34d) which are disposed distributed over the surface of the advertising medium.

5. Device according to Claim 1 or 2, **characterised in that** the first communication device comprises a camera (40) and an image processing unit and/or pattern recognition unit (42) for detecting at least one surface feature (38a-38d) of the advertising medium (18b), which constitutes the second communication device.

6. Device according to Claim 5, **characterised in that** the second communication device comprises a plurality of surface features (38a-38b) which are disposed distributed over the surface of the advertising medium (18b).

7. Device according to Claim 1 or 2, **characterised in that** the first communication device comprises an interrogator (20) which initiates a data exchange connection with a transponder (26) of the second communication device.

8. Device according to Claim 7, **characterised in that** the transponder (26) is a passive transponder.

9. Device according to any one of Claims 1 to 8, **characterised in that** the second communication device (26) comprises at least one sensor unit (44/46) for detecting the integrity of the advertising medium (18c).

10. Device according to Claim 9, **characterised in that** the sensor unit comprises a conductor loop (46) and a resistance sensor (44).

11. Device according to any one of Claims 1 to 10, **characterised in that** the second communication device (26) is designed to receive and store data which are transmitted to it by the first communication device (20).

12. Device according to any one of Claims 1 to 11, **characterised in that** the second communication device (26) supplies data regarding the time at which the preceding credit was issued.

13. Device according to any one of Claims 1 to 12, **characterised in that** the second communication device (26) supplies data regarding the time at which the advertising medium (16) was attached to the vehicle (12).

14. Device according to any one of Claims 1 to 13, **characterised in that** the second communication device (26) supplies data regarding the duration of the agreed attachment of the advertising medium (16) to the vehicle (12) .

15. Device according to any one of Claims 1 to 14, **characterised in that** the second communication device (26) supplies data regarding the vehicle (12) to which the advertising medium (16) is attached.

16. Device according to any one of Claims 1 to 15, **characterised in that** it also comprises an approach detection device (24) which activates the first communication device (20) and/or the second communication device (26) upon detection of an approach of the vehicle (12) to the cont rol point (14).

17. Device according to Claim 16, **characterised in that** the approach detection device comprises an induction loop (24), for example disposed in a driving surface (22).

18. Device according to any one of Claims 1 to 17, **characterised in that** the advertising medium comprises a sheet (18).

19. Device according to any one of Claims 1 to 17, **characterised in that** the advertising medium comprises a three-dimensional body (16).

20. Device according to any one of Claims 1 to 19,
**characterised in that** the advertising medium (18) is formed and/or can be disposed on the vehicle in such a way that, on the one hand, it can be removed without damaging the vehicle (12) but, on the other hand, it can only be removed from the vehicle (18) [sic] by destroying the advertising medium (18) itself.

21. Process for cashless payment of the fee for the attachment of at least one advertising medium (16,18) to a vehicle (12), through the use of a device according to any one of Claims 1 to 20, the process comprising the steps of:
a. verifying at a control point (14) the presence of the advertising medium (16,18) on the vehicle (12) and
b. issuing a credit as payment for the attachment of the advertising medium (16,18), depending on the result of the verification in step a.

22. Process according to Claim 21, **characterised in that** a first communication device (20) is provided at the control point (14) and a second communication device (26,28) is provided on the advertising medium (16,18).

23. Process according to Claim 21 or 22, **characterised in that** the credit is only issued if the integrity of the advertising medium (16,18) has been detected.

24. Process according to any one of Claims 21 to 23, **characterised in that** the credit is only issued if a predetermined time period has passed since a credit was last issued.

25. Process according to any one of Claims 21 to 24, **characterised in that** the credit is issued by being immediately offset against an amount to be paid at the control point (14).

26. Process according to any one of Claims 21 to 24, **characterised in that** the credit is issued in the form of a credit receipt.

27. Process according to any one of Claims 21 to 24, **characterised in that** the credit is issued by a corresponding entry on a read/write storage medium (50).

28. Process for checking and paying for the presence of advertising of a company on vehicles at set time intervals, **characterised by** means of company-issued fuel credits which can be used by the drivers of the vehicles, which can be redeemed at filling stations after the presence of the advertisement has been automatically verified by means of a reading device (e.g. a scanner), wherein the verification is carried out by a device (10) comprising:
- a first communication device (20) disposed at a control point (14) and a second communication device (26) disposed on the advertising medium (16), wherein the second communication device (26) supplies data for the first communication device (20) by means of which the presence of the advertising medium (16) on the vehicle (12) can be verified, as well as
- a device (32) for issuing a credit as payment for the attachment of the advertising medium (16) to the vehicle (12) depending on the result of the presence verification.

29. Process according to Claim 29, **characterised in that** the redemption of this credit is made to depend upon whether a predetermined time has passed since the last partial redemption of a credit.

30. Process according to Claim 28 or 29, **characterised in that** the fuel credit is the form of a debitable chip card.

31. Process according to Claim 28, **characterised in that** a debitable medium that contains the fuel credit is attached and that the pump nozzle is provided with a device for debiting the dispensed fuel on the medium and from the account of the company in the filling station.

32. Process according to Claim 31, **characterised in that** the medium only permits the debit if a positive message is supplied to the device attached to the vehicle, which device communicates with the medium and determines the integrity of the advertising surfaces.

## Revendications

1. Dispositif (10) pour le règlement automatisé sans espèces de l'indemnité pour l'application d'au moins un support publicitaire (16) sur un véhicule (12), comprenant :
- un premier appareil de communication (20) disposé en un point de contrôle (14) et un second appareil de communication (26) disposé sur le support publicitaire (16), le second appareil de communication (26) mettant à disposition pour le premier appareil de communication (20) des informations à l'aide desquelles la présence du support publicitaire (16) sur le véhicule (12) peut être vérifiée ainsi qu'
- un appareil (32) pour l'établissement d'un avis de crédit comme indemnité pour l'application du support publicitaire (16) sur le véhicule (12) en fonction du résultat du contrôle de présence.

2. Dispositif selon la revendication 1,
**caractérisé en ce que** le point de contrôle est une station-service ( 14) ou un point de péage ou un appareil à boucle d'induction disposé dans la chaussée ou une station-relais par exemple d'un réseau de téléphonie mobile ou un satellite tournant autour de la Terre.

3. Dispositif selon la revendication 1 ou 2,
**caractérisé en ce que** le second appareil de communication comprend au moins un code barres (34a-34d) disposé sur le support publicitaire (18a) et **en ce que** le premier appareil de communication présente un appareil de lecture de code barres (36) pour la saisie d'au moins un code barres.

4. Dispositif selon la revendication 3,
**caractérisé en ce que** le second appareil de communication comprend un grand nombre de codes barres (34a-34d) qui sont disposés et répartis sur la surface du support publicitaire.

5. Dispositif selon la revendication 1 ou 2,
**caractérisé en ce que** le premier appareil de communication comprend un appareil photo (40) et un appareil de traitement d'images ou/et une unité de reconnaissance de modèle (42) pour la reconnaissance d'au moins une caractéristique de surface (38a-38d) du support publicitaire (18b), qui forme le second appareil de communication.

6. Dispositif selon la revendication 5,
**caractérisé en ce que** le second appareil de communication comprend un grand nombre de caractéristiques de surface (38a-38d) qui sont disposées avec une répartition à la surface du support publicitaire (18b).

7. Dispositif selon la revendication 1 ou 2,
**caractérisé en ce que** le premier appareil de communication comprend un interrogateur (20) qui est en liaison d'échange de données avec un transpondeur (26) du second appareil de communication.

8. Dispositif selon la revendication 7,
**caractérisé en ce que** le transpondeur (26) est un transpondeur passif.

9. Dispositif selon l'une des revendications 1 à 8,
**caractérisé en ce que** le second appareil de communication (26) comprend au moins une unité capteur (44/46) pour l'enregistrement de l'intégrité du support publicitaire (18c).

10. Dispositif selon la revendication 9,
**caractérisé en ce que** l'unité capteur comprend une boucle de conducteur (46) et un capteur de résistance (44).

11. Dispositif selon l'une des revendications 1 à 10,
**caractérisé en ce que** le second appareil de communication (26) est conçu pour la réception et le stockage de données qui lui sont transmises par le premier appareil de communication (20).

12. Dispositif selon l'une des revendications 1 à 11,
**caractérisé en ce que** le second appareil de communication (26) fournit des données sur l'instant de l'établissement antérieur de l'avis de crédit.

13. Dispositif selon l'une des revendications 1 à 12,
**caractérisé en ce que** le second appareil de communication (26) fournit des données sur l'instant de l'application du support publicitaire (16) sur le véhicule (12).

14. Dispositif selon l'une des revendications 1 à 13,
**caractérisé en ce que** le second appareil de communication (26) fournit des données sur la durée de l'application convenue du support publicitaire (16) sur le véhicule (12).

15. Dispositif selon l'une des revendications 1 à 14,
**caractérisé en ce que** le second appareil de communication (26) fournit des données sur le véhicule (12) sur lequel le support publicitaire (16) est appliqué.

16. Dispositif selon l'une des revendications 1 à 15,
**caractérisé en ce qu'**il comprend également un dispositif de détection d'approche (24), qui, en cas de la détection d'une approche de véhicule (12) du point de contrôle (14), active le premier appareil de communication (20) et/ou le second appareil de communication (26).

17. Dispositif selon la revendication 16,
**caractérisé en ce que** l'appareil de détection d'approche comprend une boucle d'induction (24) posée par exemple dans une surface de roulement (22).

18. Dispositif selon l'une des revendications 1 à 17,
**caractérisé en ce que** le support publicitaire comprend un film ( 18).

19. Dispositif selon l'une des revendications 1 à 17,
**caractérisé en ce que** le support publicitaire comprend un corps (16) à trois dimensions.

20. Dispositif selon l'une des revendications 1 à 19,
**caractérisé en ce que** le support publicitaire (18) est conçu ou/et peut être disposé sur le véhicule de telle manière qu'il peut être enlevé à nouveau du véhicule (18) d'une part sans détérioration du véhicule (12) mais d'autre part avec destruction du support publicitaire (18) même.

21. Procédé pour le règlement sans espèces de l'indemnité pour l'application d'au moins un support publicitaire (16, 18) sur un véhicule (12) avec l'utilisation d'un dispositif selon l'une des revendications 1 à 20,
le procédé comprenant les étapes suivantes :
a) contrôle de la présence du support publicitaire (16, 18) sur le véhicule (12) en un point de contrôle (14) et
b) établissement d'un avis de crédit comme indemnité pour l'application du support publicitaire (16, 18) en fonction du résultat du contrôle à l'étape a.

22. Procédé selon la revendication 21,
**caractérisé en ce qu'**on prévoit au point de contrôle (14) un premier appareil de communication (20) et sur le support publicitaire (16, 18) un second appareil de communication (26, 28).

23. Procédé selon la revendication 21 ou 22,
**caractérisé en ce que** l'avis de crédit n'est établi que dans le cas où l'intégrité du support publicitaire (16, 18) a été détectée.

24. Procédé selon l'une des revendications 21 à 23,
**caractérisé en ce que** l'avis de crédit n'est établi que dans le cas où un laps de temps prédéfini s'est écoulé depuis la date du dernier établissement.

25. Procédé selon l'une des revendications 21 à 24,
**caractérisé en ce que** l'avis de crédit est établi par imputation immédiate avec un montant à régler au point de contrôle (14).

26. Procédé selon l'une des revendications 21 à 24,
**caractérisé en ce que** l'avis de crédit est établi sous la forme d'un justificatif d'avis de crédit.

27. Procédé selon l'une des revendications 21 à 24,
**caractérisé en ce que** l'avis de crédit est établi par une instruction correspondante sur un support de mémorisation (50) pouvant être écrit/lu.

28. Procédé pour contrôler et régler la présence de publicité d'une société sur des véhicules automobiles à des intervalles de temps définis,
**caractérisé par** des bons de carburant spécifiques à la société et pouvant être utilisés par les conducteurs des véhicules, qui peuvent être encaissés à des stations-service après un contrôle de la présence de la publicité qui est effectué automatiquement au moyen d'un lecteur (par exemple scanner), le contrôle étant effectué au moyen d'un dispositif (10) comprenant les éléments suivants :
- un premier appareil de communication (20) disposé au point de contrôle (14) et un second appareil de communication (26) disposé sur le support publicitaire (16), le second appareil de communication (26) fournissant pour le premier appareil de communication (20) des informations à l'aide desquelles la présence du support publicitaire (16) sur le véhicule peut être contrôlée, et
- un appareil (32) pour l'établissement d'un bon de carburant comme indemnité pour l'application du support publicitaire (16) sur le véhicule (12) en fonction du résultat du contrôle de présence.

29. Procédé selon la revendication 28,
**caractérisé en ce que** l'encaissement de ce bon de carburant est effectué en fonction du fait qu'un certain laps de temps s'est écoulé depuis le dernier encaissement de bon.

30. Procédé selon la revendication 28 ou 29,
**caractérisé en ce que** le bon de carburant a la forme d'une carte à puce apte à effectuer une comptabilisation.

31. Procédé selon la revendication 28,
**caractérisé en ce qu'**un support contenant le bon de carburant est appliqué et **en ce que** le pistolet à carburant est pourvu d'un appareil pour la comptabilisation du carburant servi sur le support et sur le compte de la société à la station-service.

32. Procédé selon la revendication 31,
**caractérisé en ce que** le support n'autorise la comptabilisation que dans le cas où l'on a un message positif d'un appareil propre au véhicule qui est en liaison avec le support et détermine l'intégrité des surfaces publicitaires.
